(19) **Europäisches Patentamt / European Patent Office / Office européen des brevets**

(11) **EP 1 385 154 B1**

(12) **EUROPEAN PATENT SPECIFICATION**

(45) Date of publication and mention
of the grant of the patent:
**03.03.2010 Bulletin 2010/09**

(51) Int Cl.:
*G11B 7/085* (2006.01)     *G11B 7/09* (2006.01)
*G11B 23/40* (2006.01)

(21) Application number: **03016719.1**

(22) Date of filing: **22.07.2003**

(54) **Optical pickup with increased moving range**

Optischer Lesekopf mit breiterem Ausschlag

Tête de lecture optique à débattement élargi

(84) Designated Contracting States:
**DE FR GB**

(30) Priority: **23.07.2002   JP 2002213649**

(43) Date of publication of application:
**28.01.2004   Bulletin 2004/05**

(73) Proprietor: **YAMAHA CORPORATION**
**Naka-ku**
**Hamamatsu-shi**
**Shizuoka-ken (JP)**

(72) Inventor: **Hayashi, Toyofumi,**
**c/o Yamaha Corporation**
**Hamamatsu-shi,**
**Shizuoka-ken,**
**430-8650 (JP)**

(74) Representative: **Emde, Eric et al**
**Wagner & Geyer**
**Gewürzmühlstrasse 5**
**80538 München (DE)**

(56) References cited:
**US-A- 5 504 688     US-A- 5 748 607**
**US-A- 5 831 953     US-A- 6 046 970**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

[FIELD OF THE INVENTION]

This invention relates to an optical pickup which irradiates a laser light focused on a recording face in an internal layer of an optical disk and on a front surface of the optical disk, and to an optical disk recording apparatus equipping such an optical pickup.

[PRIOR ART]

There have conventionally been dedicated printers capable of printing desired Information on a label surface of an optical disk. Also, such printers have been available that can print information not only on paper but also can print information on the label surface of an optical disk by use of a dedicated cartridge. Moreover, some optical disks have plain label surfaces without brand names or the like written thereon. A coating that stabilizes ink immediately after printing is applied to such optical disks.

Users can use the optical disks and printers mentioned above to print desired visual information such as contents information about data recorded in the optical disk on the label surface of the optical disk. Accordingly, the users can easily recognize recorded contents in the optical disk anytime by checking the legible information printed on the label surface without playing back the optical disk on a reproducing device.

However, after data is recorded into the optical disk by an optical disk recording apparatus, the optical disk must be taken out and set in the printer mentioned above. Such handling poses a problem that this operation is troublesome to the users.

Consequently, an apparatus is proposed which integrates the printer and the optical disk recording apparatus, and not only records data into a recording face of an optical disk but also can print desired information on the label surface of the optical disk in which the data has already been recorded.

However, problems of such recording and printing apparatus are a complicated configuration and a high price because the apparatus has a size larger than that of the conventional optical disk recording apparatus owing to the configuration in which the printer and the optical disk recording apparatus are integrated as described above. Another problem is a trouble of maintenance since the ink needs to be replenished if the printer adopts an ink jet method, and a nozzle from which the ink is discharged needs to be cleaned when the printer has not been used for a long time.

US-A-5,831,953 discloses an optical disk device of a simple structure using an optical pickup alone as read mechanism for detecting a thickness of the substrate of an optical disk. The optical disk device (1) carries out the focus search by moving the focal point of a laser beam emitted through an objective lens in a direction along the thickness of the optical disk in a region covering both the substrate surface and the recording layer, (2) converts S-shaped wave forms produced in a focus error signal FES from a two-piece photo-diode when the focal point passes through the substrate surface and recording layer, respectively into a digital signal $CP_{out}$, and (3) detects a pulse interval of the digital signal $CP_{out}$, by means of an MPU. Since the MPU detects the number of pulses of the digital signal $CP_{out}$, the optical disk device can also detect the number of the recording layers. Thus, there is disclosed an apparatus for recording data on an optical disk having at least a substrate surface, a recording face, and a reflection layer disposed under the recording face, the recording face being irradiated by a laser light through the substrate surface to record and reproduce data, the apparatus comprising an optical pickup having an objective lens for irradiating the laser light to the optical disk through the objective lens, and a microprocessor for controlling the recording of the data, wherein the substrate surface of the optical disk faces to the optical pickup when the data is recorded into the recording face.

SUMMARY OF THE INVENTION

An object of the present invention is therefore to provide an optical pickup which not only records data into a recording face of an optical disk but also can form a desired image on a label surface of the optical disk, and an optical disk recording apparatus equipping with such an optical disk.

This invention provides an optical pickup as defined in claim 1, an apparatus as defined in claim 4, and a method as defined in claim 6. Preferred embodiments of the present invention may be gathered from the dependent claims.

(1) In the optical pickup, a laser light is condensed by an objective lens movable in a thickness direction of an optical disk to apply the condensed light to the optical disk, wherein
a total movable range of the objective lens is set to be equal to or more than a sum of an allowance range where the objective lens moves to keep a constant distance between the objective lens and a recording face even if the optical disk undergoes up and down fluctuation when the laser light is focused on the recording face in an internal layer of the optical disk, and an additional range obtained by dividing a distance from a substrate surface to the recording face of the optical disk by an absolute refraction index of a optical disk substrate.

According to the present invention, the optical pickup is used to record data into the recording face of the optical disk. Further, in a state where a recording face side and a label surface side of the optical disk are set upside down, the optical pickup can also be used to form a desired image on a label surface of the optical disk, which is coated with a special paint. The laser light irradiated from the optical pickup is focused [1] on the recording face in the internal layer of the optical disk, and is focused [2] on the label surface when the optical disk are set upside down. In both the cases [1] and [2], the movable range is set so that the optical pickup follows a focusing servo control without difficulty, in the present invention.

Therefore, the movable range of the objective lens in the optical pickup of the present invention is constituted as described below. First, the movable range is set to be the same in both the cases [1] and [2] to deal with the level fluctuation of the optical disk. This is possible because an amount of level fluctuation of the optical disk is the same even if the surfaces of the optical disk are set upside down.

Next, for the case of [2], the additional range obtained by dividing the distance between the recording face and substrate surface of the optical disk by the absolute refraction index of the optical disk substrate is added to the movable range of [1]. This distance is broadly equivalent to a distance between a position of the objective lens when the laser light is focused on the recording face in the internal layer of the optical disk, and another position of the objective lens when the laser light is focused on the label surface of the optical disk with the surfaces of the optical disk set upside down. The total movable range of the objective lens is set to be equal to or more than a sum of the movable range set for the level fluctuation of the optical disk and the movable range set to change a focus position of the laser light. In this way, the objective lens can be moved from a position when the laser light is focused on the recording face in the internal layer of the optical disk to another position when the laser light is focused on the label surface of the optical disk.

As described above, with the use of the optical pickup of the present invention, data is recorded into the recording face of the optical disk considering the level variation of the surface. Further, in a state where the recording face side and label surface side of the optical disk are set upside down, the optical pickup can also be used to form a desired image on the label surface of the optical disk to which the special paint that forms colors when irradiated with the laser light is applied.

(2) When a first base point is a position at which the objective lens condenses the laser light to be focused on the recording face in the internal layer of the optical disk and a second base point is another position at which the objective lens condenses the laser light to be focused on the substrate surface or a label surface of the optical disk, an inward movable range of the objective lens from the first base point to a side of the optical disk is about the same as an outward movable range of the objective lens from the second base point to a side opposite to the optical disk.

When the surface of the optical disk has moved, an amount of level fluctuation of the optical disk is about the same whether the objective lens is positioned at the first base point or the objective lens is positioned at the second base point. Therefore, the level fluctuation of the optical disk can be dealt with by setting the same movable range, whichever position the objective lens is set. As a result, the laser light can always be focused on the moving recording face in the internal layer of the optical disk, and also the laser light can always be focused on a moving front surface of the optical disk.

(3) In the optical recording apparatus provided with an optical pickup set forth in (2), a focusing servomechanism controls the optical pickup so that the optical pickup performs focusing servo in one of areas extending from the first base point and the second base point. An input section is provided for selecting the area to perform the focusing servo, and a control section is provided for setting the area where the focusing servomechanism performs the focusing servo in accordance with an input content from the input section.

In this configuration, when a user inputs one of the areas extending from two different points from the input section, the control section sets the area to perform the focusing servo for the focusing servomechanism. In this way, the optical pickup can perform focusing in the set area under the control of the focusing servomechanism.

(4) When the area extending from the second base point is selected as a focusing depth area by the input section, the control section makes the optical pickup irradiate a laser light based on a laser light irradiation pattern for forming an image on a label surface of an optical disk.

When the user selects an area extending from a position at which the objective lens condenses the laser light to be focused on the front surface of the optical disk as an area for the optical disk recording apparatus to perform focusing servo, it is possible for the control section of the optical disk recording apparatus to perform the focusing servo. Further, the optical pickup can be made to irradiate the laser light based on a laser light irradiation pattern for forming an image on the label surface. Therefore, in the case of a recording-type optical disk in which the special paint that forms colors when irradiated with the laser light is applied on the label surface, data can be recorded onto the recording face by setting the recording face to face the optical pickup. Further, an image can be formed on the label surface by setting the label surface to face the optical pickup.

BRIEF DESCRIPTION OF THE DRAWINGS

FIG. 1 is a block diagram showing a configuration of an optical disk recording apparatus in accordance with an embodiment of the present invention.

FIGS. 2(A) through 2(C) are diagrams showing a positional relationship between an objective lens and an optical disk.

FIGS. 3(A) and 3(B) are diagrams showing formed images in a polar coordinate system and source images in an orthogonal coordinate system, respectively.

FIG. 4 is an image diagram in which the image is converted from the orthogonal coordinate system to the polar coordinate system.

FIG. 5 is a flowchart for describing the operation of the optical disk recording apparatus.

FIGS. 6(A) through 6(D) are display examples of an image production program.

FIG. 7 is a block diagram showing a structure of the optical pickup.

DETAILED DESCRIPTION OF THE INVENTION

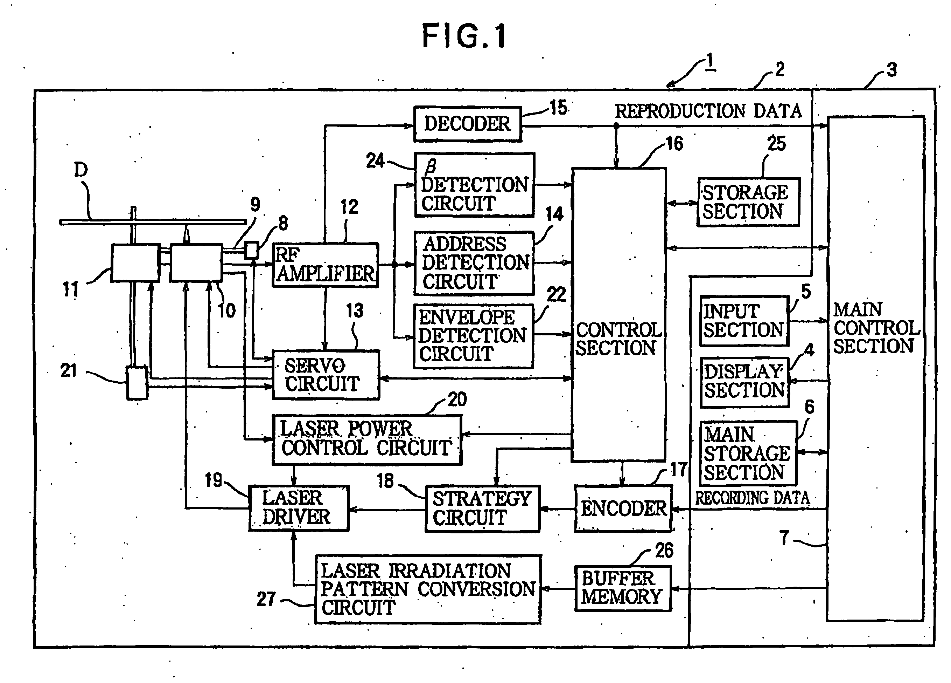

An optical pickup and an optical disk recording apparatus in accordance with an embodiment of the present invention will be described below. FIG. 1 is a block diagram showing a configuration of the optical disk recording apparatus in accordance with the embodiment of the present invention. As shown in FIG. 1, an optical disk recording apparatus 1 in accordance with the embodiment of the present invention has a configuration in which an optical disk drive 2 is connected to a host computer 3. The optical disk drive 2 comprises a feed motor 8, a guide rail 9, an optical pickup 10, a spindle motor 11, an RF amplifier 12, a servo circuit 13, an address detection circuit 14, a decoder 15, a control section 16, an encoder 17, a strategy circuit 18, a laser driver 19, a laser power control circuit 20, a frequency generator 21, an envelop detection circuit 22, a β detection circuit 24, a storage section 25, a buffer memory 26, and a laser irradiation pattern conversion circuit 27. The host computer 3 comprises a display section 4, an input section 5, a main storage section 6, and a main control section 7.

The feed motor 8 is a motor which supplies a driving force to move the optical pickup 10 in a radial direction of an optical disk D.

The guide rail 9 supports the optical pickup 10 so that the optical pickup 10 moves in the radial direction of the optical disk D.

The spindle motor 11 is a motor which rotationally drives the optical disk D into which data is to be recorded. An end portion of a rotary shaft of the spindle motor 11 is provided with an unshown optical disk holding mechanism comprising a turntable or the like for holding (chucking) the optical disk D.

The optical pickup 10 comprises an optical system such as a laser diode, lenses and mirrors; a returning light (reflected light) receiving element; a focus servomechanism and the like. The optical pickup 10 applies a laser light to the optical disk D during recording and reproducing, and forms pits to record data. Further, receiving a light returning from the optical disk D. the optical pickup 10 outputs an EFM-modulated RF signal, which is a light reception signal, to the RF amplifier 12. In addition, the focus servomechanism is a servomechanism to keep a constant distance between an objective lens of the optical pickup 10 and a data recording face in an internal layer of the optical disk D. Moreover, the optical pickup 10 comprises a monitor diode, and by receiving part of a laser light emitted by the laser diode, a current is produced in the monitor diode, and then this current is supplied to the laser power control circuit 20.

The frequency generator 21 detects a relative position signal of the optical disk D output by the spindle motor 11, so as to output a signal for detecting a rotation angle and rotation speed of the optical disk D to the servo circuit 13.

The RF amplifier 12 amplifies the EFM-modulated RF signal supplied from the optical pickup 10, so as to output the amplified RF signal to the servo circuit 13, address detection circuit 14, envelop detection circuit 22, β detection circuit 24 and decoder 15.

During reproduction, the decoder 15 EFM-demodulates the EFM-modulated RF signal supplied from the RF amplifier 12 to generate reproduction data, and outputs it to the data storage circuit 25. During data recording, the decoder 15 EFM-demodulates the RF signal supplied from the RF amplifier 12 when reproducing from an area in which data is recorded by test recording.

The address detection circuit 14 extracts a wobble signal component from the EFM signal supplied from the RF amplifier 12, and decodes time information of positions contained in this wobble signal component (address information), identification information for identifying the optical disk D (disk ID) and information indicating a kind of disk such as a pigment on the optical disk D, and then outputs them to the control section 16. In addition, the time information of positions contained in the wobble signal component (address information), identification information for identifying the optical disk D (disk ID) and information indicating a kind of disk such as a pigment on the optical disk are also referred to as ATIP (Absolute Time In Pregroove).

The $\beta$ detection circuit 24 calculates $\beta$ (asymmetry) as parameters concerning a quality level of the reproducing signal from the RF signal supplied from the RF amplifier 12 when reproduction is performed in the test recorded area of the optical disk D, and outputs the calculation result to the control section 16. Here, it is possible to obtain $\beta$ by $\beta = (a + b)/(a - b)$ in which a is a peak level (sign is +) in an EFM-modulated signal waveform and b is a bottom level (sign is -).

Before applying the test recording to the optical disk D, the envelop detection circuit 22 detects an envelope of the EFM signal in a count area of the optical disk D mentioned above in order to detect which part of the test area of the optical disk D to start the test recording in.

The servo circuit 13 performs rotation control of the spindle motor 11, focus control (focusing servo) and tracking control (tracking servo) of the optical pickup 10, and feed control of the optical pickup 10 by means of the feed motor 8.

Here, the optical disk recording apparatus I in accordance with the present embodiment can switch between a CAV (Constant Angular Velocity) method in which the optical disk D is driven at a constant angular velocity and a CLV (Constant Linear Velocity) method in which the optical disk D is driven at a constant linear velocity, during recording. Therefore, the servo circuit 13 switches between the CAV method and CLV method in accordance with a control signal supplied from the control section 16. In the case of CAV control, the servo circuit 13 controls the spindle motor 11 so that the rotation speed of the spindle motor 11 detected by the frequency generator 21 corresponds to a set rotation speed. In the case of CLV control, the servo circuit 13 controls the spindle motor 11 so that the wobble signal component in the signal supplied from the RF amplifier 12 becomes equivalent to a set linear velocity ratio.

The encoder 17 EFM-modulates recording data output from the main control section 7 and outputs it to the strategy circuit 18. The strategy circuit 18 applies time axis correction processing or the like to the EFM signal from the encoder 17, and outputs it to the laser driver 19. The laser driver 19 drives the laser diode of the optical pickup 10 in response to a signal modulated in accordance with the recording data supplied from the strategy circuit 18 and to a control signal of the laser power control circuit 20.

The laser power control circuit 20 controls power of the laser light emitted from the laser diode of the optical pickup 10. More specifically, the laser power control circuit 20 controls the laser driver 19 on the basis of a current value output from a monitor diode of the optical pickup 10 and information indicating a targeted value of optimum laser power transmitted from the control section 16 so that the laser light with the optimum laser power is irradiated by the optical pickup 10.

The control section 16 is constituted of a CPU, a ROM, a RAM and the like, and controls each section of the optical disk recording apparatus 1 in accordance with a program stored in the ROM to record data and form a visible image on the optical disk. It also reproduces the data recorded in the optical disk. The control section 16 further performs self-adjustment of the servo to identify the kind of set optical disk for recording, and outputs predetermined signals to the servo circuit 13, laser power control circuit 20 and encoder 17, respectively. When these signals are output, the optical pickup 10 moves to a predetermined position, and applies the laser light to the optical disk for recording to record data. When the data recorded in the optical disk is checked and reproduced and when a position of the optical disk where a recording error is caused is detected, for example, the light receiving element of the optical pickup 10 receives a returning light of the irradiated light, and thus outputs an electrical signal corresponding to the amount of received light to the RF amplifier 12. The RF amplifier 12 amplifies this signal, and thus outputs it to the decoder 15, $\beta$ detection circuit 24, address detection circuit 14 and envelop detection circuit 22. On the basis of the signals from these circuits, the control section 16 performs the processing mentioned above.

The storage section 25 stores data previously obtained by conducting experiments or the like and firmware of the optical disk recording apparatus 1, for example.

The buffer memory 26 temporarily stores visible image forming data transferred from the main control section 7, and outputs it to the laser irradiation pattern conversion circuit 27. The laser irradiation pattern conversion circuit 27 converts the image forming data into a laser irradiation pattern, and outputs it to the laser driver 19. In addition, in a configuration in which the image forming data is converted into the laser irradiation pattern by the main control section 7, the buffer memory 26 and laser irradiation pattern conversion circuit 27 are unnecessary.

The display section 4 of the host computer 3 displays the signal quality level of the data recorded in the optical disk D and information to be sent from the optical disk recording apparatus 1 to a user, for example. The input section 5 is used by the user to perform various controls and operations on the optical disk recording apparatus 1. The main storage section 6 stores a program for performing data processing with regard to the image that is to be recorded onto the label surface of the optical disk D by the optical disk drive 2, and image recording data which is information for recording the image on the label surface of the optical disk. The main control section 7 controls each section of the optical disk recording apparatus to record, check and reproduce data and to record images.

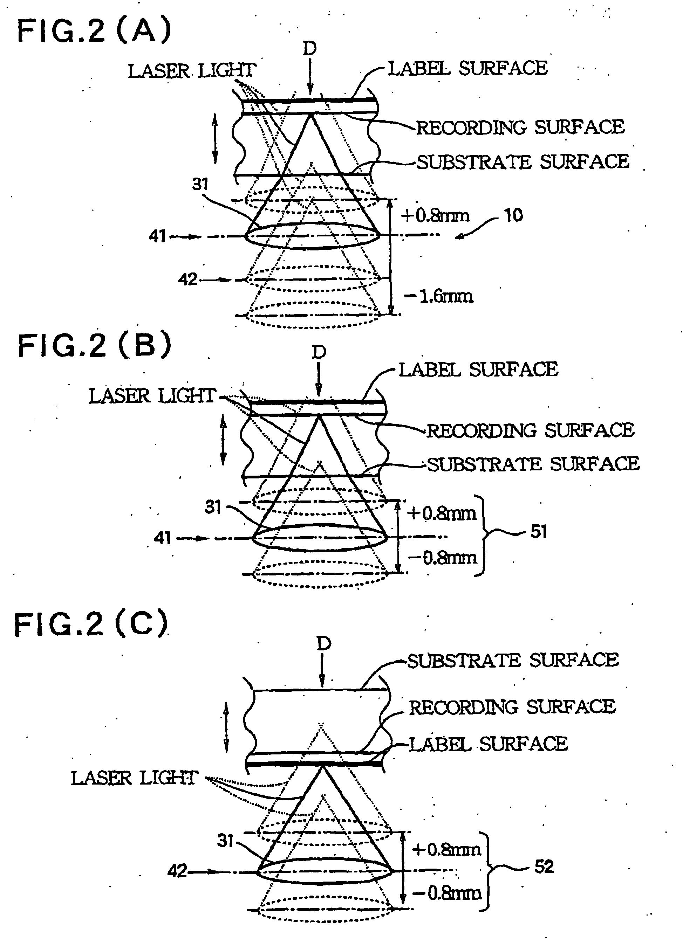

Next, a detailed configuration and operation of the optical pickup 10 will be described. FIGS. 2(A), 2(B) and 2(C) are diagrams showing a position relationship between the objective lens and the optical disk. The optical pickup 10 of the optical disk recording apparatus I of the present invention can select one of areas extending from two different points to achieve the focusing servo. More specifically, as shown in FIG. 2(B), when the laser light is focused on the recording face of the optical disk D, an objective lens 31, which condenses the laser light, is moved in a thickness direction of the optical disk around a position 41 (hereinafter referred to as a first base point) of the objective lens 31, thereby enabling the focusing servo. Further, as shown in FIG. 2(C), when the laser light is focused on a front surface of the optical disk D, the objective lens 31, which condenses the laser light, is moved in a thickness direction of the optical disk around a position 42 (hereinafter referred to as a second base point) of the objective lens 31, thereby enabling the focusing servo. In addition, a focusing area 51 (hereinafter referred to as a first area) from the first base point and a focusing area 52 (hereinafter referred to as a second area) from the second base point are both set to have about the same distance (range), considering level fluctuation and warping of the optical disk D when rotated. For example, the first area 51 and the second area 52 are set to $\pm$ 0.8 mm, in the examples shown in FIGS. 2(A) - 2(C).

Furthermore, the optical pickup 10 can move the position of the objective lens 31 to the first base point 41 and the second base point 42 by means of the focusing servomechanism, by a predetermined input from the input section 5 of the host computer 3.

Therefore, the total movable range of the objective lens 31 of the optical pickup 10 is set to be equal to or more than a sum of a distance (range) on a side of the optical disk in the first area 51, a distance (range) on a side opposite to the optical disk in the second area 52, and a distance obtained by dividing a distance between the recording face and a polycarbonate substrate surface of the optical disk by an absolute refraction index (= 1.584) of polycarbonate. In addition, the distance obtained by dividing the distance between the recording face and the polycarbonate substrate surface of the optical disk by the absolute refraction index (= 1.584) of polycarbonate is an optical path length in the air converted from an optical path length in the optical disk substrate through which the laser light travels from the front surface to the recording face of the optical disk. In the examples shown in FIGS. 2, the distance (range) on the side of the optical disk in the first area 51, the distance (range) on the side opposite to the optical disk in the second area 52 are both 0.8 mm. Moreover, a length obtained by dividing a length (1.2 mm) between the recording face and the polycarbonate substrate surface of the optical disk by the absolute refraction index (= 1.584) of polycarbonate is about 0.76 mm. Therefore, the total movable range of the objective lens 31 is about 2.4 mm ($\fallingdotseq$ 2.36 mm).

In addition, the distance (range) on the side of the optical disk in the first area 51 is set so that the objective lens 31 does not contact the front surface of the optical disk even if the level of the optical disk varies when rotationally driven.

Furthermore, it is preferable that a designer of the optical disk recording apparatus 1 set the movable range of the objective lens 31 on the side opposite to the optical disk D to be more than double the movable range to the side of the optical disk D, when the first base point 41 is an initial position (also referred to as a home position or neutral position) of the objective lens 31 of the optical pickup 10, as shown in FIG. 2(A). As a result, the optical pickup 10 of the present invention may be newly designed, but can easily be obtained by modifying the design of a conventional optical pickup which designates only the first area as the movable range so as to extend the movable range in a direction opposite to the optical disk.

The optical pickup 10 of the present invention performs focusing in the first area 51 and thus forms pits by applying the laser light to the recording face in the internal layer of the optical disk similarly to the conventional optical pickup, thereby achieving recording of desired data. Further, the optical pickup 10 of the present invention performs focusing in the second area 52 and then applies the laser light to a label layer on the front surface of the optical disk, which is not accomplished in the conventional optical pickup, and thus can form an image representing desired information a label surface of the optical disk to which a special paint is applied. Images such as characters, symbols, drawings or pictures associated with the data recorded in the optical disk D can be formed as the desired information. Naturally, images of information that is not associated with the data recorded in the optical disk D may also be formed.

Here, a reflected light of the laser light applied to the label surface by the optical pickup 10 is weaker than a reflected light of the laser light applied to the recording face. This is because, in the case of a CD-R, for example, a lower layer of the recording face (organic dye layer) is provided with a reflection layer formed of a metal (such as gold, silver or aluminum), but the label surface is not provided with such a reflection layer. Therefore, when the optical disk recording apparatus l performs focusing in the second area 52 to apply the laser light to the label surface of the optical disk, it is necessary to increase a light receiving gain so that a focusing error should not occur. In other words, regarding an AGC (Auto Gain Controller) of the optical disk recording apparatus, it is necessary to set a adjustment range of the AGC wide so that the gain can be adjusted when performing focusing in the first area and when performing focusing in the second area, and to provide such a configuration that enables the gain to be switched depending on the area where focusing is performed.

In order to form an image on the label surface of the optical disk D by means of the optical disk recording apparatus 1 of the present invention, it is necessary to use an optical disk in which the special paint is applied to the label surface as described above. Those materials used as this special paint would be, for example, a photosensitive agent which is photosensitized and forms colors when irradiated with the laser light, a heat sensitive agent which is sensitized to heat and forms colors when irradiated with the laser light, or a micro-encapsulated paint whose capsule melts with laser heat and which forms colors with a paint contained in the capsule that flows out when irradiated with the laser light. The user of the optical disk recording apparatus 1 of the present invention can use such an optical disk to form the image representing the desired information on the label surface of the optical disk.

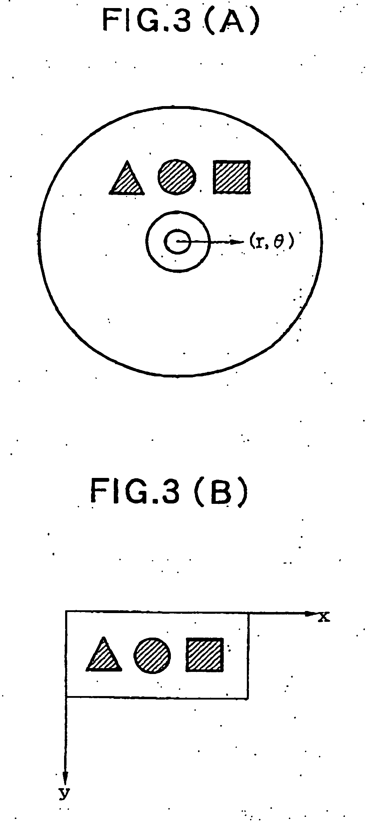

Next, an operation of the optical disk recording apparatus 1 of the present invention will be described where an image is formed on the label surface of the optical disk. FIGS. 3 are diagrams showing source images in an orthogonal coordinate system, and source images in a polar coordinate system for image formation. The optical disk recording apparatus l irradiates the laser light from the optical pickup 10 used for recording data into the recording face of the optical disk while rotating the optical disk, thereby forming an image on the label surface of the optical disk D. Therefore, as the laser irradiation pattern for an image to be formed on the optical disk D, the optical disk recording apparatus l uses one based on the image in the polar coordinate system, as shown in FIG. 3(A).

Here, images generally handled by computers or the like are the images in the orthogonal coordinate system as shown in FIG. 3(B), not the images in the polar coordinate system. Therefore, the optical disk recording apparatus l converts image data in the orthogonal coordinate system into image data in the polar coordinate system, and applies the laser light while rotating the optical disk on the basis of the image data (image formation data) in the polar coordinate system, thereby producing data (hereinafter referred to as serial data) in which laser irradiation pattern data for forming an image are continuously tied. On the basis of this serial data, the image is formed on the label surface of the optical disk D from a designated position to start recording $(R_0, \theta_0)$.

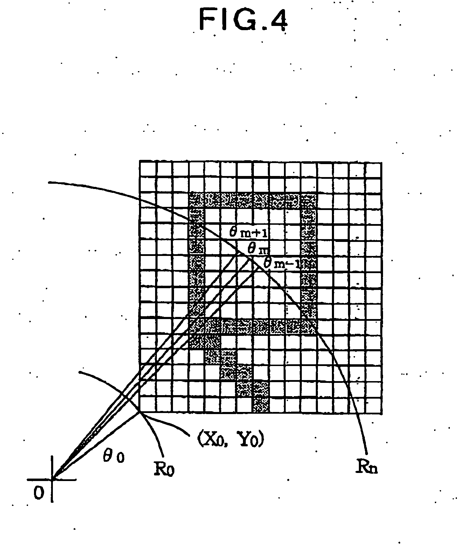

For example, the optical disk recording apparatus 1 produces the image formation data at the main control section 7 on the basis of image data in a bmp (bit map) format that is an example of the image data in the orthogonal coordinate system. FIG. 4 is an image diagram in which an image is converted from the orthogonal coordinate system to the polar coordinate system. First, to enable a predetermined gradation expression when the image is formed, intensity of the irradiation power of the laser light is adjusted in accordance with the gradation, and dither processing is applied to the image in the bmp format, for example. The dither processing is a method of expressing color thickness by changing distribution and density of dots. Next, the dither-processed image in the bmp format is placed on polar coordinates, in which optional one point is decided, so as to convert the image data in the bmp format into the image data in the polar coordinate system. In other words, with a lower right corner $(x, y) = (X_0, Y_0)$ of the image in the orthogonal coordinate system as a reference point as shown in FIG. 4, the image data is converted on the basis of an equation as follows:

$$r = \sqrt{(X^2 + Y^2)}, \quad \theta = \tan^{-1}(Y / X)$$

Further, the image data in the polar coordinate system is converted into serial data, in order for the optical disk recording apparatus 1 to form the image by applying the laser light to the optical disk. On the basis of the serial data thus produced, the optical disk recording apparatus 1 applies the laser light to the position designated to start recording, thereby forming the image on the label surface of the optical disk.

In addition, in the optical disk drive 2, a feed amount (e.g., 8 $\mu$m) in a radial direction of the optical disk of the optical pickup 10 is larger for the label surface of the optical disk than a pitch (1.6 $\mu$m) of a pregroove formed on the recording face of the optical disk, and if the laser light is irradiated with that feed amount to form the image, density of pixels formed on the label surface becomes low. Therefore, in the optical disk recording apparatus l, the optical pickup is vibrated with predetermined amplitude in the radial direction of the optical disk on a predetermined cycle or on every varied cycle, so that the laser light is applied to the same circumference a plurality of times. In this way, since the laser light can be applied to different positions on the same circumference, density of the image formed on the label surface can be high.

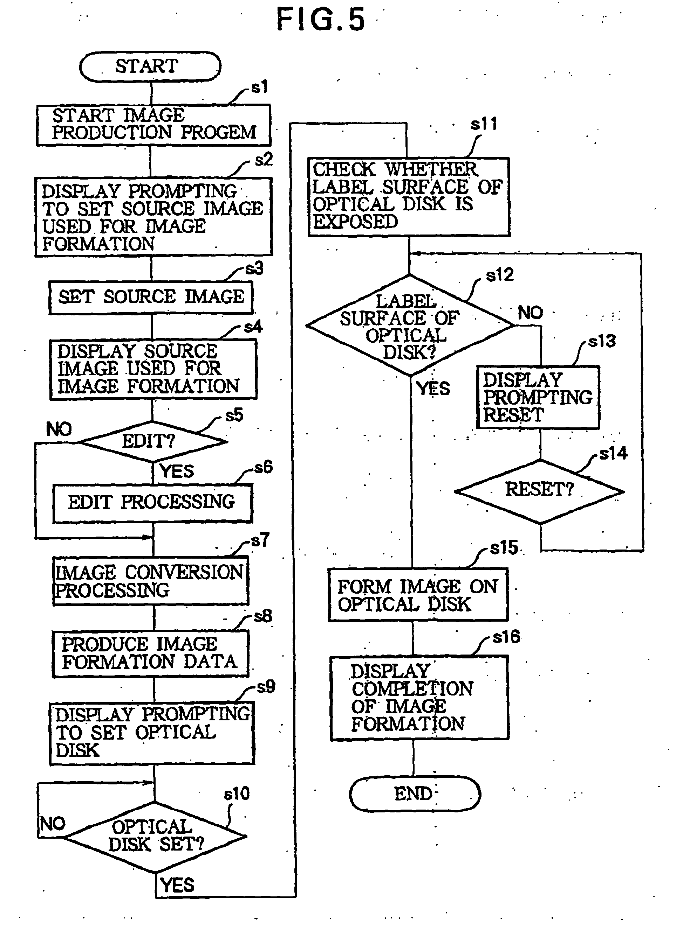

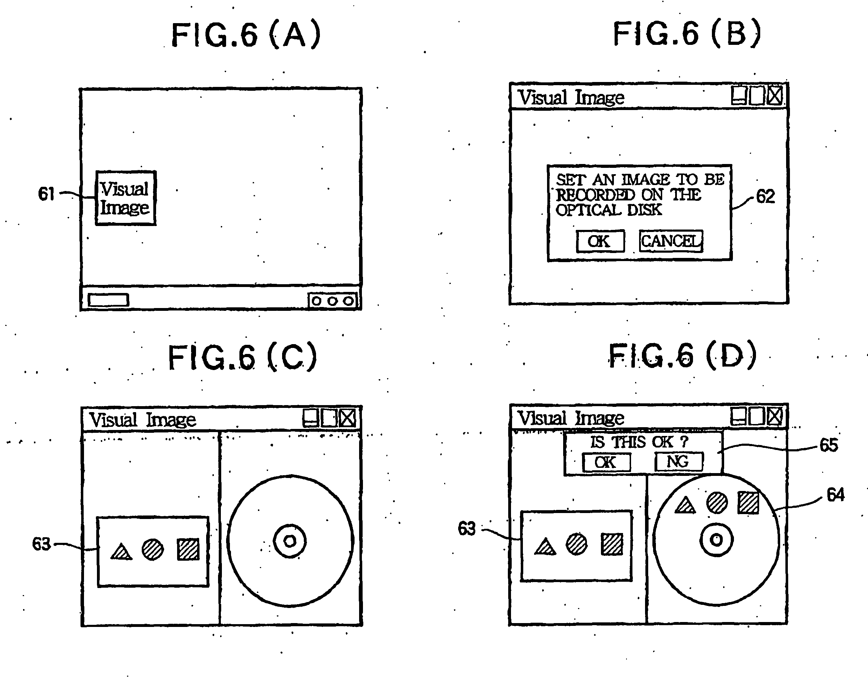

Next, the operation of the optical disk recording apparatus of the present invention will be described in accordance with a flowchart. FIG. 5 is a flowchart for describing the operation of the optical disk recording apparatus. When forming an image on the label surface of the optical disk, the user first sets an image to be formed on the label surface by the optical disk recording apparatus l. More specifically, a desired image is formed by using an image production program installed on the host computer 3. The image formation data is produced in the following procedure. FIGS. 6 show display examples of the image production program. First, the user selects an icon 61 of the image production program displayed on the display section 4 of the optical disk recording apparatus l as shown in FIG. 6(A), thereby performing a starting operation of the image production program. Detecting this operation, the main control section 7 of the optical disk recording apparatus l reads and starts the image production program stored in the main storage section 6 (sl). As shown in FIG. 6(B), the main control section 7 makes the display section 4 display a display 62 which prompts the user to set an optional character, drawing (image data in the orthogonal coordinate system) or the like to be formed as an image on the optical disk (s2). In accordance with the display, the user sets an image 63 such as the optional character or drawing to be recorded as an image on the optical disk, as shown in FIG. 6(C). At this point, the user may input an optical character from the input section 5, or may start other image production software to produce the optional image and use this image. Further, character data or image data stored in the storage section 6 of the host computer 3 may be read. Still further, character data or image data may be obtained from Web sites on the Internet.

When the source image 63 is set (s3), the optical disk recording apparatus 1 makes the display section 4 display the image 64 in which the set image data of the bmp format is superimposed on the image of the optical disk, as shown in FIG. 6(D) (s4). The main control section 7 makes the display section 4 display an image 65 to ask the user whether or not to edit the image (s5). When satisfied with the image after formed which is displayed on the display section 4, the user selects a decision button displayed on the display section 4, thereby directing the optical disk recording apparatus l to produce image formation data. On the other hand, when there is a problem with the image after formed which is displayed on the display section 4, the user changes an image forming position or adjusts a size of the image, thereby processing the displayed image (s6). Finishing the adjustment, the user selects the decision button, and thus directs the optical disk recording apparatus 1 to produce the image formation data.

When directed to produce the image formation data by the user, the main control section 7 of the optical disk recording apparatus l converts the image data in the orthogonal coordinate system set by the user into the image data in the polar coordinate system, for example (s7). On the basis of the image data in the polar coordinate system, the main control section 7 then produces serial data in which irradiation pattern data of the laser light irradiated to form the image on the optical disk are continuously linked, and produces the image formation data from the serial data and information on the position to start forming the image (s8).

After finishing the production of the image formation data, the main control section 7 transfers the image formation data to the optical disk drive 2. Further, the main control section 7 makes the display section 4 display a display which prompts the user to set the optical disk to form the image on the label surface (s9). Having confirmed this display, the user sets the optical disk in a manner that the label surface of the optical disk faces the optical pickup.

Detecting that the optical disk is set (s10), the main control section 7 of the optical disk recording apparatus l checks if the label surface of the optical disk is set to face the optical pickup. In other words, the main control section 7 makes the control section 16 output a signal for moving the objective lens 31 of the optical pickup 10 to the second base point to the servo circuit 13. On receipt of this signal, the servo circuit 13 controls the focusing servomechanism to move the objective lens 31 to the second base point, and sets the focusing servomechanism to accomplish the focusing servo in the second area. Further, the main control section 7 switches the gain of the AGC circuit provided in the RF amplifier 12 by the control section 16 to be suitable for the second area (s11). The laser light with low power, which is the same as that applied when the data is reproduced, is applied to the set optical disk, and thus a front and rear of the optical disk is determined by the power received from a reflected light (s12). Since the recording face of the optical disk is set to face the optical pickup when the reflected light of the laser light has power more than predetermined power, the main control section 7 makes the display section 4 display a content to prompt the user to turn over and reset the optical disk (s13). Detecting that the user has turned over the optical disk (s14), the main control section 7 again performs the processing of s12.

On the other hand, since the label surface of the optical disk is set to face the optical pickup when the reflected light of the laser light has power below predetermined power, the main control section 7 starts forming the image on the label surface of the optical disk.
More specifically, the optical pickup is moved to the predetermined position to start recording the image, and then the laser light irradiation is started from that position on the basis of the serial data, thereby forming the image on the label surface of the optical disk (s15).

After finishing the formation of the image, the main control section 7 makes the display section 4 display a content indicating that the image has been formed on the label surface of the optical disk (s16). The processing is thus finished. Namely, the image formation program is used in the optical recording apparatus having a processor and the optical pickup for recording information in an optical disk formed of a substrate having a pair of major surfaces spaced from each other by a thickness of the substrate and a recording face interposed between the major surfaces. The program is executable by the processor for causing the optical recording apparatus to perform a method comprising the steps of designating one of the recording face and the major surface as a target of recording information, servo-controlling the actuator of the optical pickup when the recording face is designated to move the objective lens around the first base point within the allowance range to focus the light spot on the recording face to thereby record the information in the recording face, and servo-controlling the actuator when the major surface is designated to move the objective lens around the second base point within the allowance range to focus the light spot on the major surface to thereby record the information in the major surface.

The laser light is set to be focused on the label surface of the optical disk so as to form an image in the above description, which is not a limited case. Specifically, for example, when the special paint is applied along an outer periphery with a predetermined width to a substrate surface on the side of the recording face of the optical disk, an image can also be formed on the substrate surface on the side of the recording face of the optical disk by irradiating the laser light in a manner that the laser light is focused on the area where the paint is applied.

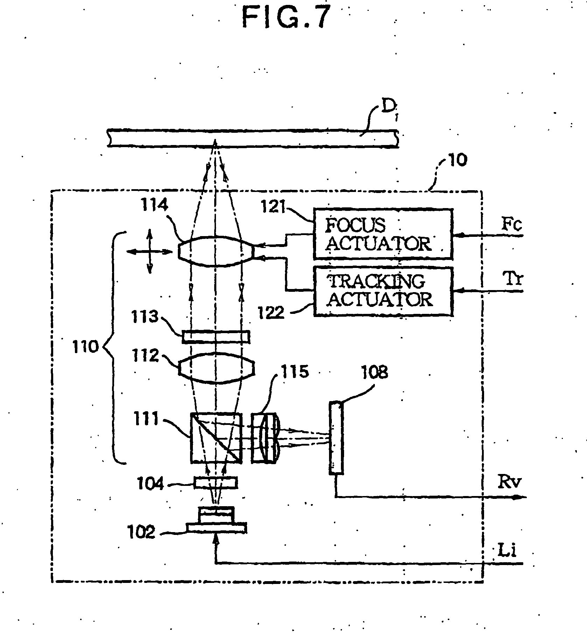

The optical pickup 10 is a block radiating a laser beam to the optical disc D that is rotating, the detailed construction thereof being as shown in Fig. 7. As shown in the drawing, the optical pickup 10 includes a laser diode 102 that emits laser beams, a diffraction grating 104, an optical system 110 for condensing a laser beam onto the optical disk D, and a light-receiving element 108 for receiving reflected (return) light.

The laser diode 102 is driven by a drive signal from the laser driver 19 (refer to Fig. 1), and emits a laser beam at the intensity based on the electric current value thereof. The laser beam emitted from the laser diode 102 is separated into a main beam and two sub-beams by the diffraction grating 104, then the beams pass through a polarizing beam splitter 111, a collimator lens 112, a 1/4 wavelength plate 113 and an objective lens 114, which constitute an optical system 110, before they are condensed onto the optical disk D.

Meanwhile, the three laser beams reflected off the optical disk D pass through the objective lens 114, the 1/4 wavelength plate 113, and the collimator lens 112 again. The laser beams are reflected at the right angles through the polarizing beam splitter 111, and pass through a cylindrical lens 115 before entering the light-receiving element 108.

A light-receiving signal Rv by the light-receiving element 108 is amplified by the RF amplifier 12 (refer to FIG. 1), then supplied to the servo circuit 13 or the like. The light-receiving element 108 actually receives the main beam and the two sub-beams, respectively. A detection area for receiving the main beam in the light-receiving element 108 is divided into four sections, and the light-receiving intensity of an optical image by the main beam is determined for each detection area. For this reason, the light-receiving signal Rv is a generic term of the signals indicating the light-receiving Intensities.

The objective lens 114 is retained by a focus actuator 121 and a tracking actuator 122, and can be moved in the direction of the optical axis of a laser beam (the vertical direction) by the former and in the radial direction of the optical disk D (the horizontal direction) by the latter.

The focus actuator 121 vertically moves the objective lens 114 in the optical axis direction by a focus coil, while the tracking actuator 122 horizontally moves the objective lens 114 in the radial direction of the optical disk D by a tracking coil. A focus signal Fc from the servo circuit 13 (refer to FIG. 1) is applied to both ends of the focus coil. Hence, the position of the objective lens 114 with respect to the optical axis direction, that is, the distance between a disk surface and the objective lens 114, is cortroled by the voltage of the focus signal Fc.

Similarly, a tracking signal Tr from the servo circuit 13 is applied to both ends of the tracking coil, so that the irradiation position of the laser beam with respect to the radial direction of the optical disk D is defined by the voltage of the tracking signal Tr.

The optical pickup 10 has a front monitor diode (not shown), and receives the laser beam emitted by the laser diode 102, the current based on the light quantity thereof is supplied to a laser power control circuit 20 in FIG. 1.

In the inventive optical pickup shown in FIG. 7, the light source 102 is provided for generating a laser light.

The objective lens 114 condenses the laser light to form a light spot for irradiating the optical disk D formed of a substrate and having a pair of major surfaces spaced from each other by a thickness of the substrate and a recording face interposed between the major surfaces. The focus actuator 121 is provided for moving the objective lens 114 in a direction of the thickness of the optical disk D within a total movable range so as to focus the light spot on either of the recording face and the major surface. The total movable range of the objective lens is set to be equal to or more than a sum of an allowance range and an additional range. The allowance range is set to allow the objective lens 114 to keep a constant distance between the objective lens 114 and the recording face even when a level of the optical disk D varies in the direction of the thickness. The additional range is set by dividing a gap between the major surface and the recording face of the optical disk D by an absolute refraction index of the substrate of the optical disk.

According to the present invention, it is possible to obtain the following effects.

(1) With the use of the optical pickup of the present invention, data is recorded into the recording face of the optical disk considering the movement of the disk surface, and in further a state where the recording face side and label surface side of the optical disk are set upside down, the optical pickup can also be used to form a desired image on the label surface of the optical disk to which the special paint that forms colors when irradiated with the laser light is applied.

(2) The laser light can always be focused on the moving recording face in the internal layer of the optical disk, and the laser light can always be focused on the moving front surface of the optical disk.

(3) When the user designates one of the areas extending from two different base points from an input section, a control section sets the designated area to perform focusing servo for the focusing servomechanism, so that the optical pickup can perform focusing in the set area under the control of the focusing servomechanism.

(4) In the case of a recording-type optical disk in which the special paint that forms colors when irradiated with the laser light is applied on the label surface, data can be recorded in the recording face by setting the recording face to face the optical pickup. Further, an image can be formed on the label surface by setting the label surface to face the optical pickup.

**Claims**

**1.** An optical pickup (10) for irradiating an optical disk (D), the optical disk (D) having a substrate surface as a first surface thereof, a label surface as a second surface thereof, and a recording face between the substrate surface and the label surface, the optical disk (D) having a thickness between the substrate surface and the label surface, the optical pickup comprising:

a light source (102) that is provided for generating a laser light;
an objective lens (31, 114) adapted to condense the laser light to form a light spot for irradiating the optical disk (D) in such a way that data can be recorded on the recording face of the optical disk (D) when the substrate surface of the optical disk (D) faces the objective lens (31), and that a visible image can be recorded on the label surface of the optical disk (D) when the label surface of the optical disk (D) faces the objective lens (31); and
an actuator (121) that is provided for moving the objective lens (31, 114) in a direction of the thickness of the optical disk (D) within a total movable range so as to focus the light spot on either one of the recording face and the label surface, wherein
the total movable range of the objective lens (31, 114) is set to be equal to or more than a sum of an allowance range and an additional range,
the allowance range being set to allow the objective lens (31, 114) to keep a constant distance between the objective lens (31, 114) and the recording face when a level of the optical disk (D) varies in the direction of the thickness,
the additional range being set by dividing a gap between the substrate surface and the recording face of the optical disk (D) by an absolute refraction index of the substrate of the optical disk (D).

2. The optical pickup according to claim 1, wherein the actuator (121) is adapted to switch the objective lens (D) between a first base point and a second base point within the total movable range, such that the objective lens (31, 114) can selectively move around the first base point within the allowance range to allow the light spot to follow the recording face or move around the second base point within the allowance range to allow the light spot to follow the label surface.

3. The optical pickup according to claim 2, wherein the actuator (121) is adapted to move the objective lens (31, 114) such that a first movable range of the objective lens (31, 114) extending from the first base point in an inward direction toward the optical disk (D) is set comparable to a second movable range of the objective lens (31, 114) extending from the second base point in an outward direction opposite to the optical disk (D).

4. An apparatus (1) for recording information in an optical disk (D), the optical disk (D) having a substrate surface as a first surface thereof, a label surface as a second surface thereof, and a recording face between the substrate surface and the label surface, the optical disk (D) having a thickness between the substrate surface and the label surface, the apparatus comprising:

an optical pickup (10) as set forth in any of the preceding claims,
focusing servo means (13) for servo-controlling the actuator (121) to move the objective lens (31, 114) around the first base point within the allowance range to focus the light spot on the recording face, and for servo-controlling the actuator (121) to move the objective lens (31, 114) around the second base point within the allowance range to focus the light spot on the label surface;
input means for designating one of the recording face and the label surface as a target of recording information; and
control means (7, 16) being operative when the recording face is designated for instructing the focusing servo means (13) to focus the light spot on the recording face based on the first base point to thereby record the information in the recording face, and being operative when the label surface is designated for instructing the focusing servo means (13) to focus the light spot on the label surface based on the second base point to thereby record the information in the label surface.

5. The apparatus according to claim 4, wherein the control means (7, 16) is operative when the input means designates the label surface of the optical disk (D) as a target of recording information for instructing the optical pickup (10) to record information such a manner as to form an visual image on the label surface.

6. A method of recording information in an optical disk (D) by an optical pickup (10) as set forth in any of claims 1-3, the optical disk (D) having a substrate surface as a first surface thereof, a label surface as a second surface thereof, and a recording face between the substrate surface and the label surface, the optical disk (D) having a thickness between the substrate surface and the label surface,
the method comprising the steps of:

designating one of the recording face and the label surface of the optical disk (D) as a target of recording information;

servo-controlling the actuator (121) when the recording face is designated to move the objective lens (31, 114) around a first base point within the allowance range to focus the light spot on the recording face to thereby record the information in the recording face; and

servo-controlling the actuator (121) when the label surface is designated to move the objective lens (31, 114) around a second base point within the allowance range to focus the light spot on the label surface to thereby record the information in the label surface; the first base point and the second base point being such that the objective lens (31, 114) can selectively move around the first base point within the allowance range to allow the light spot to follow the recording face or move around the second base point within the allowance range to allow the light spot to follow the label surface.

**Patentansprüche**

1. Ein optischer Abtastkopf bzw. eine optische Abtastvorrichtung (10) zum Bestrahlen einer optischen Speicherplatte (D), wobei die optische Speicherplatte (D) eine Substratoberfläche als eine erste Oberfläche von dieser, eine beschreibbare Oberfläche als eine zweite Oberfläche von dieser, und eine Aufzeichnungsfläche zwischen der Substratoberfläche und der beschreibbaren Oberfläche aufweist, wobei die optische Speicherplatte (D) eine Dicke zwischen der Substratoberfläche und der beschreibbaren Oberfläche aufweist,
   wobei die optische Abtastvorrichtung Folgendes aufweist:

   eine Lichtquelle (102), die zur Erzeugung eines Laserlichts vorgesehen ist;
   eine Objektivlinse (31, 114), die angepasst ist, um das Laserlicht zu verdichten, um einen Lichtfleck bzw. Lichtpunkt zum Bestrahlen der optischen Speicherplatte (D) in einer solchen Art und Weise zu erzeugen, dass Daten auf der Aufzeichnungsfläche der optischen Speicherplatte (D) aufgezeichnet werden können, wenn die Substratoberfläche der optischen Speicherplatte (D) zu der Objektivlinse (31) weist, und so dass ein sichtbares Bild auf der beschreibbaren Oberfläche der optischen Speicherplatte (D) aufgezeichnet wird, wenn die beschreibbare Oberfläche der optischen Speicherplatte (D) zu der Objektivlinse (31) weist; und
   eine Betätigungsvorrichtung (121), die vorgesehen ist, um die Objektivlinse (31, 114) in einer Dickenrichtung der optischen Speicherplatte (D) innerhalb eines Gesamtbewegungsbereichs zu bewegen, so dass der Lichtpunkt auf entweder der Aufzeichnungsfläche oder der beschreibbaren Oberfläche fokussiert wird, wobei der Gesamtbewegungsbereich der Objektivlinse (31, 114) so eingestellt wird, dass sie einer Summe eines Toleranzbereichs und eines Zusatzbereichs entspricht oder größer ist, wobei der Toleranzbereich so eingestellt wird, dass sie es der Objektivlinse (31, 114) ermöglicht, eine konstante Entfernung zwischen der Objektivlinse (31, 114) und der Aufzeichnungsfläche zu bewahren, wenn eine Höhe der optischen Speicherplatte (D) in der Dickenrichtung variiert,

   wobei der Zusatzbereich durch Teilen eines Spalts zwischen der Substratoberfläche und der Aufzeichnungsfläche der optischen Speicherplatte (D) durch einen absoluten Brechungsindex des Substrats der optischen Speicherplatte (D) eingestellt wird.

2. Optische Abtastvorrichtung gemäß Anspruch 1, wobei die Betätigungsvorrichtung (121) angepasst ist, um die Objektivlinse (31, 114) zwischen einem ersten Basispunkt und einem zweiten Basispunkt innerhalb des Gesamtbewegungsbereichs umzuschalten, so dass sich die Objektivlinse (31, 114) selektiv um den ersten Basispunkt herum innerhalb des Toleranzbereichs bewegen kann, um es dem Lichtpunkt zu ermöglichen, der Aufzeichnungsfläche zu folgen, oder sich um den zweiten Basispunkt innerhalb des Toleranzbereichs herum bewegen kann, um es dem Lichtpunkt zu ermöglichen, der beschreibbaren Oberfläche zu folgen.

3. Optische Abtastvorrichtung gemäß Anspruch 2, wobei die Betätigungsvorrichtung (121) angepasst ist, um die Objektivlinse (31, 114) so zu bewegen, dass sich ein erster Bewegungsbereich der Objektivlinse (31, 114), der sich von dem ersten Basispunkt nach innen zu der optischen Speicherplatte (D) hin erstreckt, vergleichbar zu einem zweiten Bewegungsbereich der Objektivlinse (31, 114) eingestellt wird, der sich von dem zweiten Basispunkt nach außen entgegengesetzt zu der optischen Speicherplatte (D) erstreckt.

4. Eine Vorrichtung (1) zum Aufzeichnen von Informationen auf einer optischen Speicherplatte (D), wobei die optische Speicherplatte (D) eine Substratoberfläche als eine erste Oberfläche von dieser, eine beschreibbare Oberfläche als eine zweite Oberfläche von dieser und eine Aufzeichnungsfläche zwischen der Substratoberfläche und der beschreibbaren Oberfläche aufweist,
wobei die optische Speicherplatte (D) eine Dicke zwischen der Substratoberfläche und der beschreibbaren Oberfläche aufweist, wobei die Vorrichtung Folgendes aufweist:

eine optische Abtastvorrichtung (10) gemäß einem der vorangehenden Ansprüche,
eine Fokussierservoeinrichtung (13) zur Servosteuerung der Betätigungsvorrichtung (121), um die Objektivlinse (31, 114) um den ersten Basispunkt herum innerhalb des Toleranzbereichs zu bewegen, um den Lichtpunkt auf der Aufzeichnungsfläche zu fokussieren, und zur Servosteuerung der Betätigungsvorrichtung (121), um die Objektivlinse (31, 114) um den zweiten Basispunkt herum innerhalb des Toleranzbereichs zu bewegen, um den Lichtpunkt auf der beschreibbaren Oberfläche zu fokussieren;
ein Eingabemittel, um entweder die Aufzeichnungsfläche oder die beschreibbare Oberfläche als ein Ziel für die Aufzeichnungsinformation zuzuweisen; und
ein Steuermittel (7, 16), das betriebsbereit ist, wenn die Aufzeichnungsfläche zur Anweisung der Fokussierservoeinrichtung (13) zugewiesen wird, um den Lichtpunkt auf der Aufzeichnungsfläche basierend auf dem ersten Basispunkt zu fokussieren, um dadurch die Information auf der Aufzeichnungsfläche aufzuzeichnen, und das betriebsbereit ist, wenn die beschreibbare Oberfläche zur Anweisung der Fokussierservoeinrichtung (13) zugewiesen wird, um den Lichtpunkt auf der beschreibbaren Oberfläche basierend auf dem zweiten Basispunkt zu fokussieren, um dadurch die Information auf der beschreibbaren Oberfläche aufzuzeichnen.

5. Vorrichtung gemäß Anspruch 4, wobei das Steuermittel (7, 16) betriebsbereit ist, wenn das Eingabemittel die beschreibbare Oberfläche der optischen Speicherplatte (D) als Ziel der Aufzeichnungsinformation zum Anweisen der optischen Abtastvorrichtung (10) zuweist, um Informationen in einer solchen Art und Weise aufzuzeichnen, dass sie ein sichtbares Bild bzw. Abbild auf der beschreibbaren Oberfläche bilden.

6. Ein Verfahren zum Aufzeichnen von Informationen auf einer optischen Speicherplatte (D) durch eine optische Abtastvorrichtung (10) gemäß einem der Ansprüche 1-3, wobei die optische Speicherplatte (D) eine Substratoberfläche als eine erste Oberfläche von dieser, eine beschreibbare Oberfläche als eine zweite Oberfläche von dieser und eine Aufzeichnungsfläche zwischen der Substratoberfläche und der beschreibbaren Oberfläche besitzt, wobei die optische Speicherplatte (D) eine Dicke zwischen der Substratoberfläche und der beschreibbaren Oberfläche aufweist, wobei das Verfahren die folgenden Schritte aufweist:

Zuweisen von entweder der Aufzeichnungsfläche oder der beschreibbaren Oberfläche der optischen Speicherplatte (D) als ein Ziel für die Aufzeichnungsinformationen;
Servosteuern der Betätigungsvorrichtung (121), wenn die Aufzeichnungsfläche zugewiesen wird, um die Objektivlinse (31, 114) um einen ersten Basispunkt innerhalb des Toleranzbereichs zu bewegen, um den Lichtpunkt auf der Aufzeichnungsfläche zu fokussieren, um dadurch die Informationen auf der Aufzeichnungsfläche aufzuzeichnen; und
Servosteuern der Betätigungsvorrichtung (121), wenn die beschreibbare Oberfläche zugewiesen wird, um die Objektivlinse (31, 114), um einen zweiten Basispunkt herum innerhalb des Toleranzbereichs zu bewegen, um den Lichtpunkt auf der beschreibbaren Oberfläche zu fokussieren, um dadurch die Informationen auf der beschreibbaren Oberfläche aufzuzeichnen,

wobei der erste Basispunkt und der zweite Basispunkt so sind, dass sich die Objektivlinse (31, 114) selektiv um den ersten Basispunkt innerhalb des Toleranzbereichs bewegen kann, um es dem Lichtpunkt zu ermöglichen, der Aufzeichnungsfläche zu folgen, oder sich um den zweiten Basispunkt innerhalb des Toleranzbereichs bewegen kann, um es dem Lichtpunkt zu ermöglichen, der beschreibbaren Oberfläche zu folgen.

## Revendications

1. Tête de lecture optique (10) pour irradier un disque optique (D), le disque optique (D) comportant une surface de substrat en tant que première surface, une surface d'étiquette en tant que deuxième surface, et une face d'enregistrement entre la surface de substrat et. la surface d'étiquette, le disque optique (D) ayant une épaisseur entre la surface de substrat et la surface d'étiquette, la tête optique comprenant :

une source de lumière (102) prévue pour générer une lumière laser;
une lentille d'objectif (31, 114) apte à condenser la lumière laser pour former une tâche lumineuse pour irradier le disque optique (D) de telle sorte que des données peuvent être enregistrées sur la face d'enregistrement du disque optique (D) lorsque la surface de substrat du disque optique (D) est tournée vers la lentille d'objectif (31), et qu'une image visible peut être enregistrée sur la surface d'étiquette du disque optique (D) lorsque la surface d'étiquette du disque optique (D) est tournée vers la lentille d'objectif (31) ; et

un actionneur (121) prévu pour déplacer la lentille d'objectif (31, 114) dans la direction de l'épaisseur du disque optique (D) dans une plage de débattement total de façon à focaliser la tache lumineuse sur la surface d'enregistrement ou la surface d'étiquette, dans lequel

la plage de débattement total de la lentille d'objectif (31, 114) est réglée pour être supérieure ou égale à la somme d'une plage autorisée et d'une plage additionnelle, la plage autorisée étant réglée de façon à permettre à la lentille d'objectif (31, 114) de maintenir une distance constante entre la lentille d'objectif (31, 114) et la face d'enregistrement lorsque le niveau du disque optique (D) varie dans la direction de l'épaisseur,

la plage additionnelle étant établie en divisant un intervalle entre la surface de substrat et la face d'enregistrement du disque optique (D) par un indice de réfraction absolue du substrat du disque optique (D).

2. Tête de lecture optique selon la revendication 1, dans laquelle l'actionneur (121) est apte à commuter la lentille d'objectif (D) entre un premier point de base et un deuxième point de base se trouvant dans la plage de débattement total, de sorte que la lentille d'objectif (31, 114) peut se déplacer sélectivement autour du premier point de base dans la plage autorisée pour permettre à la tâche lumineuse de suivre la face d'enregistrement ou de se déplacer autour du deuxième point de base dans la plage permise pour permettre à la tâche lumineuse de suivre la surface d'étiquette.

3. Tête de lecture optique selon la revendication 2, dans laquelle l'actionneur (121) est apte à déplacer la lentille d'objectif (31, 114) de telle sorte qu'une première plage de débattement de la lentille d'objectif (31, 114) s'étendant à partir du premier point de base dans une direction orientée vers l'intérieur vers le disque optique (D) est établie comparable à une deuxième plage de débattement de la lentille d'objectif (31, 114) s'étendant à partir du deuxième point de base dans une direction orientée vers l'extérieur opposée au disque optique (D).

4. Dispositif (1) pour enregistrer des informations sur un disque optique (D), le disque optique (D) comportant une surface de substrat en tant que première surface, une surface d'étiquette en tant que deuxième surface, et une face d'enregistrement entre la surface de substrat et la surface d'étiquette, le disque optique (D) ayant une épaisseur entre la surface de substrat et la surface d'étiquette, le dispositif comprenant :

une tête de lecture optique (10) selon l'une quelconque des revendications précédentes, des moyens de servocommande de focalisation (13) pour une servocommande de l'actionneur (121) pour déplacer la lentille d'objectif (31, 114) autour du premier point de base dans la plage autorisée pour focaliser la tâche lumineuse sur la face d'enregistrement, et pour une servocommande de l'actionneur (121) pour déplacer la lentille d'objectif (31, 114) autour du deuxième point de base dans la plage permise pour focaliser la tâche lumineuse sur la surface d'étiquette ;

des moyens d'entrée pour désigner l'une de la face d'enregistrement ou de la surface d'étiquette en tant que cible d'enregistrement d'information ; et

des moyens de commande (7, 16) actionnables, lorsque la face d'enregistrement est désignée, pour donner instruction aux moyens de servocommande de focalisation (13) de focaliser la tâche lumineuse sur la face d'enregistrement sur la base du premier point de base pour enregistrer ainsi les informations sur la face d'enregistrement, et actionnables, lorsque la surface d'étiquette est désignée, pour donner instruction aux moyens de servocommande de focalisation (13) de focaliser la tâche lumineuse sur la surface d'étiquette sur la base du deuxième point de base pour enregistrer ainsi les informations sur la surface d'étiquette.

5. Dispositif selon la revendication 4, dans lequel les moyens de commande (7, 16) sont actionnables, lorsque les moyens d'entrée désignent la surface d'étiquette du disque optique (D) en tant que cible d'enregistrement d'informations, pour donner instruction à la tête de lecture optique (10) d'enregistrer des informations de façon à former une image visuelle sur la surface d'étiquette.

6. Procédé d'enregistrement d'informations sur un disque optique (D) par une tête de lecture optique (10) selon l'une quelconque des revendications 1 à 3, le disque optique (D) comportant une surface de substrat en tant que première surface, une surface d'étiquette en tant que deuxième surface, et une face d'enregistrement entre la surface de substrat et la surface d'étiquette, le disque optique (D) ayant une épaisseur entre la surface de substrat et la surface d'étiquette,

le procédé comprenant les étapes suivantes :

désigner l'une de la face d'enregistrement ou de la surface d'étiquette du disque optique (D) en tant que cible d'enregistrement d'informations ;

servo-commander l'actionneur (121) lorsque la face d'enregistrement est désignée pour déplacer la lentille d'objectif (31, 114) autour d'un premier point de base dans la plage permise pour focaliser la tâche lumineuse sur la face d'enregistrement pour enregistrer ainsi les informations sur la face d'enregistrement ; et

servo-commander l'actionneur (121) lorsque la surface d'étiquette est désignée pour déplacer la lentille d'objectif (31, 114) autour d'un deuxième point de base dans la plage permise pour focaliser la tâche lumineuse sur la surface d'étiquette pour enregistrer ainsi les informations sur la surface d'étiquette,

le premier point de base et le deuxième point de base étant tels que la lentille d'objectif (31, 114) peut se déplacer sélectivement autour du premier point de base dans la plage permise pour permettre à la tâche lumineuse de suivre la face d'enregistrement ou de se déplacer autour du deuxième point de base dans la plage permise pour permettre à la tâche lumineuse de suivre la surface d'étiquette.

# FIG.1

# FIG.2 (A)

LASER LIGHT
D
LABEL SURFACE
RECORDING SURFACE
SUBSTRATE SURFACE

31
41
42
+0.8mm — 10
−1.6mm

# FIG.2 (B)

LASER LIGHT
D
LABEL SURFACE
RECORDING SURFACE
SUBSTRATE SURFACE

31
41
+0.8mm
−0.8mm
51

# FIG.2 (C)

D
SUBSTRATE SURFACE
RECORDING SURFACE
LABEL SURFACE

LASER LIGHT
31
42
+0.8mm
−0.8mm
52

# FIG.3 (A)

# FIG.3 (B)

# FIG.4

# FIG.5

```
        ┌──────────────┐
        │    START     │
        └──────────────┘
                │
    ┌───────────────────────┐  s1
    │ START IMAGE           │
    │ PRODUCTION PROGEM     │
    └───────────────────────┘
                │
    ┌───────────────────────┐  s2
    │ DISPLAY PROMPTING     │
    │ TO SET SOURCE IMAGE   │
    │ USED FOR IMAGE        │
    │ FORMATION             │
    └───────────────────────┘
                │
    ┌───────────────────────┐  s3
    │ SET SOURCE IMAGE      │
    └───────────────────────┘
                │
    ┌───────────────────────┐  s4
    │ DISPLAY SOURCE        │
    │ IMAGE USED FOR        │
    │ IMAGE FORMATION       │
    └───────────────────────┘
                │
  NO       ◇ EDIT? ◇  s5
    ┌────────────┤
    │          YES
    │   ┌───────────────────┐  s6
    │   │ EDIT PROCESSING   │
    │   └───────────────────┘
    │           │
    └───────────┤
                │
    ┌───────────────────────┐  s7
    │ IMAGE CONVERSION      │
    │ PROCESSING            │
    └───────────────────────┘
                │
    ┌───────────────────────┐  s8
    │ PRODUCE IMAGE         │
    │ FORMATION DATA        │
    └───────────────────────┘
                │
    ┌───────────────────────┐  s9
    │ DISPLAY PROMPTING     │
    │ TO SET OPTICAL        │
    │ DISK                  │
    └───────────────────────┘
                │
  NO    ◇ OPTICAL      s10
        DISK SET? ◇
             YES
```

```
    ┌───────────────────────┐  s11
    │ CHECK WHETHER         │
    │ LABEL SURFACE OF      │
    │ OPTICAL DISK IS       │
    │ EXPOSED               │
    └───────────────────────┘
                │
        ◇ LABEL          s12
        SURFACE OF          NO
        OPTICAL     ────────────┐
        DISK? ◇                 │
             YES     ┌───────────────────┐  s13
                     │ DISPLAY           │
                     │ PROMPTING         │
                     │ RESET             │
                     └───────────────────┘
                              │
                      ◇ RESET? ◇  s14
                              │
    ┌───────────────────────┐  s15
    │ FORM IMAGE ON         │
    │ OPTICAL DISK          │
    └───────────────────────┘
                │
    ┌───────────────────────┐  s16
    │ DISPLAY               │
    │ COMPLETION            │
    │ OF IMAGE              │
    │ FORMATION             │
    └───────────────────────┘
                │
        ┌──────────────┐
        │    END       │
        └──────────────┘
```

19

# FIG.6 (A)

# FIG.6 (B)

Visual Image

61 — Visual Image

SET AN IMAGE TO BE RECORDED ON THE OPTICAL DISK — 62

OK  CANCEL

# FIG.6 (C)

# FIG.6 (D)

Visual Image

Visual Image

IS THIS OK ? — 65
OK  NG

63

— 64

63

EP 1 385 154 B1

# FIG.7

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5831953 A